# EUROPÄISCHE PATENTANMELDUNG

(11) **EP 2 322 819 A1**
(43) Veröffentlichungstag der Anmeldung: **18.05.2011**
(21) Anmeldenummer: 09014152.4
(22) Anmeldetag: 12.11.2009
(51) Int. Cl.: F16F 1/00, B21F 35/00

(54) **Federelement und Verfahren zur Herstellung eines Federlements**

(71) Anmelder: BENTELER STAHL/ROHR GMBH, 33104 Paderborn (DE)
(72) Erfinder: Özdem, Kenan, 34414 Warburg (DE); Säuberlich, Thomas, 33332 Gütersloh (DE)
(74) Vertreter: Griepenstroh, Jörg

(57) **Zusammenfassung**

Die Erfindung betrifft ein Federelement sowie ein Verfahren zur Herstellung eines Federelements, bei welchem ein durch Schweißen und Nachziehen eines Vergütungsstahls hergestelltes Profilbauteil bereit gestellt wird, welches anschließend in die gewünschte Form des Federelements gebracht und insbesondere einer Wärmebehandlung unterzogen wird.

## Beschreibung

**Die Erfindung betrifft ein Federelement sowie ein Verfahren zur Herstellung eines Federelements.**

Entwicklungen im Bereich der Kraftfahrzeugtechnik, vor allem im Bereich der Automobilindustrie, haben auch stets die Reduzierung des Kraftstoffverbrauchs bei gleichzeitiger Erhöhung der Sicherheit von Kraftfahrzeugen sowie der Stabilität zum Ziel. Eine Maßnahme zur Reduzierung des Kraftstoffverbrauchs wird in der Reduzierung des Gewichts von Teilen des Kraftfahrzeugs gesehen. Dies geschieht jedoch unter der Vorgabe, dass die Stabilität der gewichtsreduzierten Kraftfahrzeug- und Kraftfahrzeugkarosserieteile dabei nicht verringert wird, sondern zumindest gleich bleibt oder sogar verbessert werden kann.

Zu den Kraftfahrzeugbauteilen zählen beispielsweise auch Federelemente für Anwendungen im Achsbereich von Kraftfahrzeugen, an welche hohe Anforderungen bezüglich der dynamischen Bauteilfestigkeit gestellt werden. Um beispielsweise bei Ventilfedern die hohen Anforderungen an die dynamischen Bauteilfestigkeiten zu erfüllen, werden die Federn zur Vermeidung von Oberflächen rissen beispielsweise zusätzlich geschliffen und poliert. Allerdings macht das zusätzliche Fertigungsschritte notwendig.

Aus "Berichte aus der Anwendungsforschung, Ausgabe 1/2008" der Forschungsvereinigung Stahlanwendung e.V. ist im Artikel "Herstellung von Schraubenfedern aus Rohrmaterial (P 632)" bekannt, dass durch die Verwendung von Rohrmaterial eine Verringerung der Federmasse um 20 % bis 40 % bei gleicher Federfunktion erreichbar ist. Voraussetzung für die Substitution ist die Verfügbarkeit von hochwertigem Rohrmaterial mit analogen Festigkeitseigenschaften wie Federstahl. In dem Forschungsvorhaben wurde ein nahtloses Rohr aus dem Stahl 70Mn7 verwendet. Durch geeignete Wärmebehandlung wurde eine Festigkeit von Rm ca. 1.700 MPa erzielt. Die besten Testergebnisse wurden mit Federn mit nicht geschliffenen Endwindungen aus innen geschältem Rohr erreicht, wobei Lastwechseizahien bis 14 Mio. ohne Bruch realisiert werden konnten. Die Federn aus nicht geschältem Rohr zeigten Ausfälle bereits unter 100.000 Lastwer-hseln. Die Bruchursache war auf die ungenügende Qualität der Innenoberfläche zurückzuführen.

Der Erfindung liegt, ausgehend vom Stand der Technik, die Aufgabe zugrunde, ein Federelement aufzuzeigen, welches auf hohe dynamische Zugdruckbelastungen, ausgelegt ist, und ein möglichst geringes Gewicht aufweist sowie ein Verfahren zur Herstellung solcher Federelemente aufzuzeigen.

Der gegenständliche Teil der Aufgabe wird in einem Federelement mit den Merkmalen im Patentanspruch 1 gesehen.

Vorteilhafte Ausführungen des Erfindungsgedankens sind Gegenstand der abhängigen Unteransprüche.

Der verfahrensmäßige Teil der Aufgabe wird durch ein Verfahren mit den Maßnahmen des Patentanspruchs 12 gelöst.

Vorteilhafte Maßnahmen des erfindungsgemäßen Verfahrens sind Gegenstand der abhängigen Ansprüche.

Das erfindungsgemäße Federelement besteht aus einem zum Federelement umgeformten Profilbauteil, wobei das Profilbauteil mittels Schweißen und anschließenden Nachziehen hergestellt ist. Dabei ist das Federelement vorzugsweise eine Schraubenfeder. Die Schraubenfeder kann sowohl als Druckfeder als auch als Zugfeder ausgeführt sein. Das zur Herstellung des Federelements eingesetzte Profilbauteil besteht vorzugsweise aus einem Vergütungsstahl. In einer vorteilhaften Ausführung ist der Vergütungsstahl ein Manganstahl (beispielsweise 40MnB5). Darüber hinaus weist der Vergütungsstahl vorzugsweise einen Kohlenstoffgehalt zwischen 0,3 % und 0,5 % auf. Der abgesenkte Kohlenstoffgehalt verbessert die Umformeigenschaften und erlaubt das Schweißen bei der Profilbauteilherstellung. Darüber hinaus kann auf kostenintensive Legierungselemente wie Molybdän oder Nickel verzichtet werden. Durch die Vergütung des verwendeten Manganstahls können Festigkeiten von bis zu 2.000 MPa erreicht werden. Durch die Vergütung kann darüber hinaus auch die Entstehung von Härterissen vermieden werden.

Vorzugsweise sind die Profübauteile Rohre und weisen eine im Querschnitt kreisrunde Geometrie auf. Es ist allerdings auch möglich, die Profilbauteile oval auszugestalten oder mit einem anderen Querschnitt auf die Belastung hin zu optimieren. Gleiches gilt für die Wanddicken, auch diese können in ihrer Stärke an den Belastungsfall angepasst werden. Darüber hinaus kann das Federelement schutzgasvergütet sein. Dadurch wird die Entkohlung und Auskohlung des Profilbauteiles verhindert und die Lebensdauer erhöht. Ferner ist es möglich, die Oberflächen des Profilbauteiles, beispielsweise durch Kugelstrahlen, für das Beschichten vorzubereiten oder aber Druckeigenspannungen zur Erhöhung der Lebensdauer zu induzieren.

Der Einsatz von Profilbauteilen zur Herstellung von Federelementen erlaubt außerdem das innenseitige Kugelstrahlen, beispielsweise durch den Einsatz einer flexiblen Lanze, wobei Innendruckeigenspannungen erzeugt werden können, welche die Lebensdauer der Federelemente erhöhen und ebenso auch die Innenfläche für ein mögliches Beschichten vorbereiten. Die Proflbauteile bzw. Federelemente können, beispielsweise mittels des microcor® Tauchverfahrens der Firma EOT Eibach Oberflächentechnik GmbH, innen und außen beschichtet werden. Bei dem microcor®-Veriahren werden Schichtdicken in Schichtdickenbereichen < 25 µm aufgebracht unter Gewährleistung der kathodischen Schutzwirkung. Üblicherweise besteht die microcor®-Beschichtung aus einer anorganischen, metallpigmentierten Grundierung und einer organischen Deckschicht.

Ein außenseitiges Nitrieren ermöglicht durch die Aufhärtung der Qbertlächen wiederum höhere Bauteillebensdauern.

Zusätzlich können die Profilbauteile, welche für höchstfeste Rohrfedern vorgesehen sind, auch außen und/oder innen geschält werden. Durch das Schälen lassen sich kleinste Unebenheiten an der äußeren Umfangsfläche bzw. der inneren Umfangsfläche beseitigen.

Der Vorteil des Einsatzes von geschweißten und anschließend nachgezogenen Profilbauteilen besteht in ihrer geringen Exzentrizität. Daraus ergibt sich beispielsweise, dass die Lebensdauer von geschweißt-nachgezogenen Rohren im Vergleich weniger streut als die Lebensdauer nahtloser Rohre. Darüber hinaus weisen derartige Profilbauteile eine sehr gute Oberflächenqualität auf. Ebenso lassen sich enge Toleranzen der Wanddicke und des Außendurchmessers realisieren, wodurch eine sichere und reproduzierbare Fertigung der Federelemente möglich wird. Dies wiederum ermöglicht eine wirtschaftliche Fertigung, bei welcher hohe Fertigungsgeschwindigkeiten realisierbar sind.

Darüber hinaus entfälit durch den Einsatz von Profilbauteilen auch das Schleifen der Enden, da die Enden durch Plätten umgeformt werden können. Die Herstellung eines erfindungsgemäßen Federelements erfolgt durch Umformen eines Profilbauteils. Das Profilbauteil wird vor dem Umformen durch Schweißen eines Bandmaterials zu einem geschlossenen Hohlprofil und anschließendem Nachziehen hergestellt. Das Umformen des Profilbauteils zum Federelement, d. h. zu einer Schraubenfeder, erfolgt insbesondere durch Wickeln oder Winden des Profilbauteils auf einen Dorn. Natürlich ist auch eine Fertigung mit Hilfe von CNC-Windeautomaten und CNC-Wickelmaschinen möglich.

Die Schraubenfedern können im Anschluss an die Umformung schutzgasvergütet werden. Vorzugsweise erfolgt eine Innen- und/oder Außenbeschichtung der Federelemente. Zur Erhöhung der Festigkeit des Federelements kann das Profilbauteil auch innen und/oder außen kugelgestrahlt sein.

Aus Profilbauteilen hergestellte Federelemente können für hohe dynamische Zugdruckbeiastungen, aus welchen komplex überlagernde Biege- und Torsionsspannungen resultieren, eingesetzt werden. Das Gewicht von Schraubenfedern aus längsnahtgeschweißtem und nachgezogenem Rohrmaterial ist geringer als das von Drahtfedern. Die Werkstoffeigenschaften tragen zu einer weiteren Gewichtsreduzierung bei.

## Patentansprüche

1. Federelement bestehend aus einem umgeformten Profilbauteil, wobei das Profilbauteil aus einem geschweißten und nachgezogenen Profilbauteil aus einem Vergütungsstahl besteht.

2. Federelement nach Anspruch 1, **dadurch gekennzeichnet, dass** das Federelement eine Schraubenfeder ist.

3. Federelement nach einem der Ansprüche 1 oder 2, **dadurch gekennzeichnet, dass** das Federelement eine Druckfeder ist.

4. Federelement nach Anspruch 1, **dadurch gekennzeichnet, dass** der Vergütungsstahl des Profilbauteiles ein Manganstahl ist.

5. Federelement nach Anspruch 4, **dadurch gekennzeichnet, dass** das Profilbauteil aus einem Vergütungsstahl mit einem Kohlenstoffgehalt zwischen 0,3 % bis 0,5 % besteht.

6. Federelement nach einem der Ansprüche 1 bis 5, **dadurch gekennzeichnet, dass** das Profilbauteil im Querschnitt eine runde Geometrie aufweist.

7. Federelement nach einem der Ansprüche 1 bis 6, **dadurch gekennzeichnet, dass** das Profilbauteil im Querschnitt eine ovale Geometrie aufweist.

8. Federelement nach einem der Ansprüche 1 bis 7, **dadurch gekennzeichnet, dass** das Profilbauteil schutzgasvergütet ist.

9. Federelement nach einem der Ansprüche 1 bis 8, **dadurch gekennzeichnet, dass** das Profilbauteil innen und/oder außen beschichtet ist.

10. Federelement nach einem der Ansprüche 1 bis 8, **dadurch gekennzeichnet, dass** das Profilbauteil innen und/oder außen kugelgestrahlt ist.

11. Federelement nach einem der Ansprüche 1 bis 10, **dadurch gekennzeichnet, dass** die Enden des Federelements durch Umformung abgeplattet sind.

12. Verfahren zur Herstellung eines Federelements, bei welchem ein Blechband aus einem Vergütungsstahl zu einem umfangsseitig geschlossenen, rohrförmigen Profilbauteil umgeformt und längsnahtgeschweißt wird, wobei das längsnahtgeschweißte Profilbauteil nachgezogen und zu einem Federelement umgeformt wird, wobei das umgeformte Federelement anschließend vergütet wird.

13. Verfahren nach Anspruch 12, **dadurch gekennzeichnet, dass** das Profilbauteil zu einer Schraubenfeder umgeformt wird

14. Verfahren nach Anspruch 12 oder 13, **dadurch gekennzeichnet, dass** das Profilbauteil schutzgasvergütet wird.

15. Verfahren nach einem der Ansprüche 12 bis 14, **dadurch gekennzeichnet, dass** das Profilbauteil innen und/oder außen beschichtet wird.

16. Verfahren nach einem der Ansprüche 12 bis 14, **dadurch gekennzeichnet, dass** das Profilbauteil innen und/oder außen kugelgestrahlt wird.

17. Verfahren nach einem der Ansprüche 12 bis 16, **dadurch gekennzeichnet, dass** die Enden der Federelemente durch Umformung abgeplattet werden.
